# EUROPEAN PATENT APPLICATION

(11) **EP 3 203 346 A1**
(43) Date of publication of application: **09.08.2017**
(21) Application number: 16153768.3
(22) Date of filing: 02.02.2016
(51) Int. Cl.: G05D 7/01, F16K 47/08, F24D 19/10

(54) **VALVE, IN PARTICULAR HEAT EXCHANGER VALVE**

(71) Applicant: Danfoss A/S, 6430 Nordborg (DK)
(72) Inventor: Sigurdsson, Haraldur, 8240 Risskov (DK); Hølck, Poul, 8300 Odder (DK)
(74) Representative: Knoblauch, Andreas

(57) **Abstract**

Valve, in particular heat exchanger valve, comprising a housing (2a, 2b) having a first port (3) and a second port (4), a valve seat (5) located between said first port (3) and said second port (4) and having a valve seat axis (6), a valve element (7) cooperating with said valve seat (5) and presetting means (9) comprising a presetting element (10) as part of an adjustable bleed.

In such a valve, presetting should be performed with a high accuracy.

To this end said presetting element (10) is displaceable parallel to said valve seat axis (6).

## Description

The present invention relates to a valve, in particular a heat exchanger valve, comprising a housing having a first port and a second port, a valve seat located between said first port and said second port and having a valve seat axis, a valve element cooperating with said valve seat, and presetting means comprising a presetting element as part of an adjustable bleed.

The invention is described by means of a heat exchanger valve, for example a radiator valve. However, the invention can be used in other valves as well.

In a heat exchanger valve presetting means are used for limiting the flow through the valve. The presetting means define a flow resistance of the valve in the fully open state.

Basically there are two possibilities to adjust the presetting of a valve. One of these possibilities uses an adjustable bleed, i.e. a bleed the effective flow area of which can be increased or decreased. The size of this effective flow area determines the maximum flow through the valve. Another possibility is the use of a limitation of the stroke of the valve element. The valve element can be displaced in a direction away from the valve seat until it comes to rest against a stop. When this stop is displaced, the stroke of the valve element can be changed. The maximum flow through the valve is determined by the maximum distance between the valve element and the valve seat. However, it is rather difficult to produce such a stop with the necessary precision so that a presetting can be adjusted accordingly.

The object underlying the present invention is to provide for presetting means which allow for a precise presetting of the valve.

This object is solved with a valve as described at the outset in that said presetting element is displaceable parallel to said valve seat axis.

In other words, the presetting element can be displaced in a direction away from the valve seat or in a direction towards said valve seat. Such a linear displacement can be made rather accurately, so that the presetting can be adjusted with sufficiently high precision. The presetting element is part of a bleed. When the presetting element is displaced, the size of the bleed and consequently the throttling resistance of the bleed are changed.

Preferably said presetting element is arranged upstream said valve seat. This has the advantage that downstream the valve seat more space is available and there are more possibilities to design the valve housing.

In a preferred embodiment said housing comprises an inner thread, a drive element having an outer thread being threaded into said inner thread, upon rotation said drive element displacing said presetting element parallel to said valve seat axis. To perform the presetting it is only necessary to rotate the drive element within the housing. The pair of threads, i.e. the inner thread and the outer thread form a sort of gear with a relatively low ratio. It is, for example, possible to displace the presetting element over only a few millimeters when the drive element is rotated about 360°. However, another transmission ratio is possible. In this way it is possible to have a rather high resolution in adjusting the position of the presetting element.

Preferably said valve seat is formed at a valve seat member which is rotatably mounted in said housing and is fixed to said drive element in rotational direction. The rotation of the drive element is caused by a rotation of the valve seat member. The valve seat member can be driven in rotational direction from the outside, for example by means of a valve insert.

Preferably said presetting element is loaded against said drive element by means of spring means. The spring means press the presetting element against the drive element so that a very precise adjustment of the presetting element can be achieved by rotating the drive element in the threaded housing.

Preferably said spring means rest against a stop in said housing wherein said stop forms a guide for said presetting element. This is a simple way to provide for a stop. When, for example, the spring means is a helical spring and surrounds a part of the presetting element, the presetting element can be guided in the stop so that it can be kept in a middle position with respect to the valve seat.

In a further preferred embodiment the presetting element is guided by said drive element in a direction parallel to said valve axis. To this end the presetting element can be provided with a cylindrical protrusion with extends into a channel provided in the drive element.

In a preferred embodiment said presetting element together with a counter element forms a presetting opening the size of which is changed upon displacement of said presetting element. The presetting opening is defined by the combination of presetting element and counter element. Depending on the distance between the presetting element and the counter element the presetting opening can have different sizes.

Preferably said counter element is part of said housing. No separate elements are necessary to form the counter element. When, for example, the housing is injection molded from a plastic material, the counter element can be produced during the molding process.

Preferably said counter element is in form of a ring-like protrusion protruding radially inwardly in the direction towards said presetting element. This is a simple form of the counter element.

Preferably said presetting element comprises a ring-shaped wall having at least one opening. Such an opening allows for a presetting with a rather high precision.

In this case it is preferred that said opening comprises a width in circumferential direction, said width varying along said valve seat axis. This makes it possible to adjust the presetting, in particular in the low flow area.

In a preferred embodiment said presetting element is displaceable into a position in which said counter element overlaps an end of said opening away from said valve seat. In this case a minimum flow through the valve is adjusted.

Preferably said presetting element comprises an outer diameter corresponding to an inner diameter of said counter element. When the presetting element is displaced into an end position, the valve is almost closed. However, some leakages are possible.

In a preferred embodiment said second port comprises a plurality of housing openings distributed in circumferential direction around said seat axis. Since the presetting element is located upstream the valve seat, it is possible to design the housing so that the fluid can flow out of the housing in all directions radially to said valve seat axis. It is no longer necessary to mount the valve housing in a predetermined angular position, for example in relation to a heat exchanger.

A preferred embodiment of the valve will now be described in connection with a drawing, wherein:
- Fig. 1: is a sectional view of a valve, and
- Fig. 2: is an enlarged view of a detail II of Fig. 1.

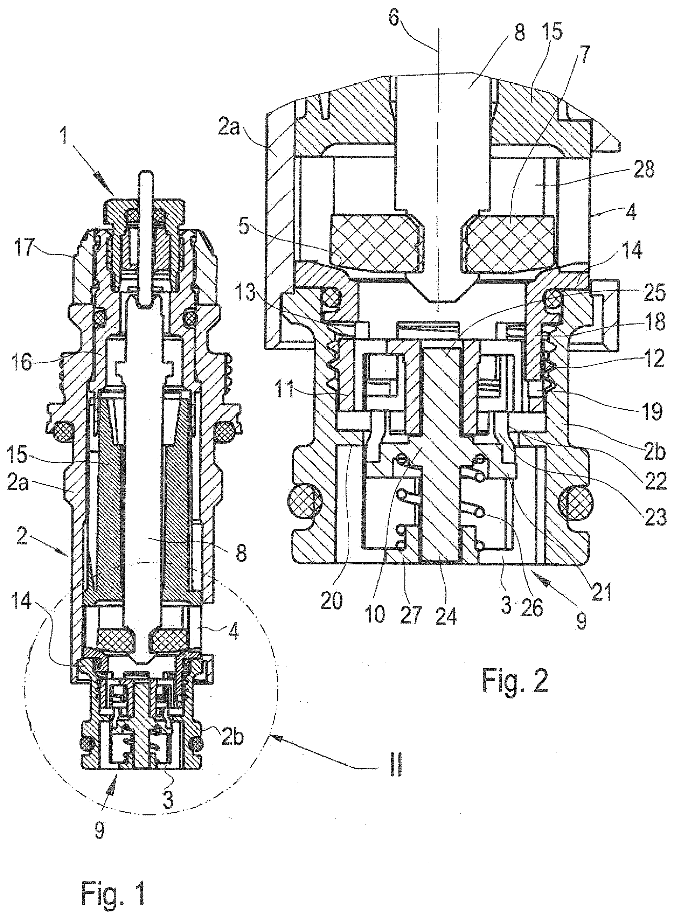

Fig. 1 shows schematically a heat exchanger valve 1, which is an example for a valve according to an embodiment of the invention. The valve 1 comprises a housing 2 having an upper part 2a and a lower part 2b. The housing 2 comprises a first port 3 and a second port 4. In the present embodiment the first port 3 serves as inlet and the second port 4 serves as outlet.

A valve seat 5 is located between said first port 3 and said second port 4 and has a valve seat axis 6. In the present embodiment the valve seat 5 has a circular form and the valve seat axis 6 passes through the center of the valve seat 5 and is perpendicular to said valve seat 5.

Furthermore, a valve element 7 is provided to cooperate with the valve seat 5. The valve element 7 is actuated by means of a valve stem 8. The valve element 7 is displaceable along the valve seat axis 6. The valve element 7 together with the valve seat 5 are called "main valve".

Presetting means 9 are provided which will be explained below. The presetting means 9 define for a given pressure the maximum flow through the valve 1 even if the valve element 7 has the largest possible distance to the valve seat 5. Said presetting means 9 are arranged upstream said main valve, i.e. upstream said valve seat 5.

Said presetting means 9 comprise a presetting element 10 which is displaceable parallel to the valve seat axis 6, i.e. the presetting element 10 is displaceable away from and towards said valve seat 5.

The displacement of the presetting element 10 is caused by a cooperation between the housing 2, more precisely the lower housing part 2b and a drive element 11. The drive element 11 comprises an outer thread 12 which is in engagement with an inner thread 13 of the housing 2.

The valve seat 5 is formed at a valve seat member 14. The valve seat member 14 is rotatably mounted in the housing 2. The rotation of the valve seat member 14 in housing 2 can be caused by rotation of a valve insert 15 which is connected via a connecting part 16 to a ring 17 on top of housing 2.

The valve seat member 14 is rotatably fixed to said drive element 11. However, the drive element 11 can be displaced relative to said valve seat member 14 parallel to said valve seat axis 6. To this end the valve seat member 14 comprises one or more protrusions 18 extending parallel to said valve seat axis 6 and protruding into a corresponding number of channels 19 which channels 19 run parallel to said valve seat axis 6.

The housing comprises a protrusion 20 protruding radially inwardly.

The presetting element comprises a base 21 the diameter of which is adapted to the inner diameter of said protrusion 20, i.e. the diameter of the base 21 is almost equal to the inner diameter of said protrusion 20. However, in order to be displaceable relative to the housing 2, the base 21 has an outer diameter which is slightly smaller than the inner diameter of the protrusion 20.

A wall 22 extends from said base 21 in a direction towards said valve seat member 14. Said wall 22 comprises a number of openings 23 which are distributed evenly in circumferential direction in said wall 22.

As can be seen in Fig. 2, the protrusion 20 forms a counter element to said presetting element 10 and closes more or less the openings 23, depending on the axial position of the presetting element 10. The counter element, i.e. in this case the protrusion 20 together, with the presetting element form the basic parts of said presetting means 9.

The presetting element 10 can be moved into a position in which it has the smallest distance to said valve seat member 14. In this position the base 21 comes in overlapping relation to the protrusion 20, i.e. to the counter element so that only a very small gap remains between the counter element and the presetting element 10. In this position the valve 1 is almost closed. Only small leakages can be observed.

The presetting element 10 comprises a first shaft 24 and a second shaft 25. The first shaft 24 is surrounded by spring means 26 which rests against a stop 27. The spring means 26 load the presetting element 10 against the drive element 11. Stop 27 forms a guide for the first shaft 24.

Drive element 11 forms another guide for the second shaft 25, so that the presetting element 10 can be held in an exact alignment with the valve seat axis 6.

Dividing a part of the presetting means 9 into the presetting element 10 and the drive element 11 has the advantage that larger tolerances are possible. It is, however, possible to form the presetting element 10 and the drive means 11 in one part.

The presetting element 10 and the drive element 11 can be made of a plastic material. The lower part 2b of the housing 2 can be made of a plastic material as well. In this case, the protrusion 20 can be made integral with the lower part 2b of the housing 2, for example by injection molding.

Furthermore, the valve seat element 14 can be made from a plastic material as well. All parts made of a plastic material can be formed by injection molding so that no further machining is necessary.

The threaded connection between the drive element 11 and the housing 2 forms a gear transmission having a relatively high transmission ratio. Rotation of the valve seat member 14 by a predetermined angle causes a relatively small displacement of the drive element 11 and consequently of the presetting means 10. Therefore, the position of the presetting element 10 relative to the protrusion 20 can be adjusted with a rather high accuracy.

As mentioned above, the presetting element 10 can be displaced in a direction towards said valve seat member 14 so that the base 21 is in overlapping relation or at least in closed proximity to said protrusion 20. In this case the opening 23 is covered by said protrusion 20.

The opening 23 can have a constant width in circumferential direction. However, in a preferred embodiment at least one opening 23 comprises a width in circumferential direction which increases in a direction from said base 21 towards said valve seat member 14, i.e. it has the largest extension in circumferential direction at the end of the wall 22 pointing to said valve seat member 14. This gives the possibility for a very high precision in the adjustment of the presetting, in particular in the low flow area.

Since the presetting means 9 are arranged upstream said valve seat 5, it is possible to design the housing 2 with a number of housing openings 28 which are distributed in circumferential direction around said valve seat axis 6. Fluid enters the housing through the first port 3 and flows basically in axial direction, i.e. parallel to the direction of the valve seat axis 6 and has the possibility to leave the housing 2 after passing the main valve in basically all radial directions (related to the valve seat axis 6). It is therefore not necessary to mount the valve with a predefined angular relation in a radiator or another heat exchanger.

## Claims

1. Valve (1), in particular heat exchanger valve, comprising a housing (2) having a first port (3) and a second port (4), a valve seat (5) located between said first port (3) and said second port (4) and having a valve seat axis (6), a valve element (7) cooperating with said valve seat (5), and presetting means (9) comprising a presetting element (10) as part of an adjustable bleed, **characterized in that** said presetting element (10) is displaceable parallel to said valve seat axis (6).

2. Valve according to claim 1, **characterized in that** said presetting element (10) is arranged upstream said valve seat (5).

3. Valve according to claim 1 or 2, **characterized in that** said housing (2) comprises an inner thread (13), a drive element (11) having an outer thread (12) being threaded into said inner thread (13), upon rotation said drive element (11) displacing said presetting element (10) parallel to said valve seat axis (6).

4. Valve according to claim 3, **characterized in that** said valve seat (5) is formed at a valve seat member (14) which is rotatably mounted in said housing (2) and is fixed to said drive element (11) in rotational direction.

5. Valve according to claim 3 or 4, **characterized in that** said presetting element (10) is loaded against said drive element (11) by means of spring means (26).

6. Valve according to claim 5, **characterized in that** said spring means (26) rest against a stop (27) in said housing (2), wherein said stop (27) forms a guide for said presetting element (10).

7. Valve according to any of claim 3 to 6, **characterized in that** said presetting element (10) is guided by said drive element (11) in a direction parallel to said valve seat axis (6).

8. Valve according to any of claims 1 to 7, **characterized in that** said presetting element (10) together with a counter element form a presetting opening the size of which is changed upon displacement of said presetting element (10).

9. Valve according to claim 8, **characterized in that** said counter element is part of said housing (2).

10. Valve according to claim 9, **characterized in that** said counter element is in form of a ring-like protrusion (20) protruding radially inwardly in a direction towards said presetting element (10).

11. Valve according to any of claims 8 to 10, **characterized in that** said presetting element (10) comprises a ring-shaped wall (22) having at least one opening (23).

12. Valve according to claim 11, **characterized in that** said opening (23) comprises a width in circumferential direction, said width varying along said valve seat axis (6).

13. Valve according to claim 11 or 12, **characterized in that** said presetting element (10) is displaceable into a position in which said counter element overlaps an end of said opening (23) at an end away from said valve seat.

14. Valve according to any of claims 8 to 13, **characterized in that** said presetting element (10) comprises an outer diameter corresponding to an inner diameter of said counter element.

15. Valve according to any of claims 1 to 14, **characterized in that** said second port (4) comprises a plurality of housing openings (28) distributed in circumferential direction around said seat axis (6)
